# EUROPEAN PATENT APPLICATION

(11) **EP 2 387 218 A2**
(43) Date of publication of application: **16.11.2011**
(21) Application number: 11162900.2
(22) Date of filing: 18.04.2011
(51) Int. Cl.: H04M 1/725

(54) **Methods and systems for distributing attachments to messages**

(30) Priority: 19.04.2010 US 325731 P
(71) Applicant: Gaquin, John, Andover, MA 01810 (US)
(72) Inventor: Gaquin, John, Andover, MA 01810 (US)
(74) Representative: Roberts, Gwilym Vaughan

(57) **Abstract**

A method and apparatus are provided for transmitting unsupported custom attachment types in a method supported by a communication technique. In one implementation, a computer-implemented method is provided for receiving a selection of an attachment for adding to an outgoing communication message to be transmitted over a network using a communication technique. The method may include determining whether the selected attachment is supported by the communication technique. The method may, when the selected attachment is unsupported by the communication technique, separate the selected attachment into individual data pieces that are supported by the communication technique. The method may further attach the individual data pieces to the outgoing communication message, and transmit the outgoing communication message using the communication technique.

## Description

### BACKGROUND

### I. Technical Field

The present disclosure generally relates to the field of wireless communication and wireless communication devices. More particularly, the disclosure relates to systems and methods for transmitting and receiving messages and attachments to messages between wireless communication devices.

### II. Background Information

Mobile electronic devices including, for example, cellular telephones, smartphones, personal digital assistants, or other such portable electronic devices are becoming increasingly common among users. Furthermore, due to the widespread proliferation of base stations and data access points across the world, users have found it easier than ever to maintain contact with other users via such mobile electronic devices. As more users turn to mobile electronic devices for their social and professional interaction with one another, it is becoming increasingly important to provide users with convenient methods for maintaining contact and sharing information with other users.

For example, mobile electronic devices typically support a variety of applications such as email, web browsing, map browsing, calendar scheduling, media playback, and instant messaging. Instant messaging may be provided by messaging applications such as Short Message Service (SMS) messaging or Multimedia Messaging Service (MMS) messaging. These messaging applications permit a user of the mobile electronic device to send messages to users of other mobile electronic devices. Furthermore, a user of a mobile electronic device may attach various data to instant messages for transmission. For example, a user may send photographs from a camera-equipped mobile electronic device to other users. Such photographs may be attached and delivered via MMS.

However, conventional MMS supports only a limited set of media types that can be attached to a message, such as text, pictures, audio, video, and ringtones, which are defined according to the MMS specification. Accordingly, users wishing to send multimedia data to other users via MMS are limited to the specific media types that are recognized by the MMS specification. For example, if an instant message is sent via MMS with an attachment that is not a standard supported type defined in the MMS specification, the intermediate network MMS server may reject the message before it reaches the recipient. Accordingly, existing messaging applications such as MMS suffer from drawbacks that limit their efficiency and usefulness.

### BRIEF DESCRIPTION OF THE DRAWINGS

The accompanying drawings, which are incorporated in and constitute a part of this disclosure, illustrate various embodiments. In the drawings:

FIG. 1 is a diagram of an exemplary communication system in which systems and methods consistent with the present disclosure may be implemented;

FIG. 2 is a block diagram an exemplary mobile electronic device in which systems and methods consistent with the present disclosure may be implemented;

FIG. 3 is a flow diagram of an exemplary method for sending custom attachments using a messaging application in accordance with certain aspects of the present disclosure;

FIG. 4 illustrates an exemplary menu screen displayed on a mobile electronic device in accordance with certain aspects of the present disclosure;

FIG. 5 illustrates an exemplary screen showing a menu of options for composing various types of electronic communications in accordance with certain aspects of the present disclosure;

FIG. 6 illustrates an exemplary screen showing an embodiment of a submenu for selecting a type of attachment to include with a message in accordance with certain aspects of the present disclosure;

FIG. 7 illustrates an exemplary screen showing an additional embodiment of a popup menu for selecting a type of attachment to include with a message in accordance with certain aspects of the present disclosure;

FIG. 8 illustrates an exemplary screen showing a menu for allowing a user to attach a custom attachment to a message in accordance with certain aspects of the present disclosure;

FIG. 9 illustrates an exemplary screen allowing a user to confirm a user's location for providing as a custom attachment in accordance with certain aspects of the present disclosure;

FIG. 10 illustrates an exemplary screen showing an instant message composition user interface in accordance with certain aspects of the present disclosure;

FIG. 11 illustrates an exemplary screen showing an instant message user interface providing a listing of communications sent or received via instant messaging in accordance with certain aspects of the present disclosure; and

FIG. 12 is a flow diagram of an exemplary method for receiving custom attachments via a messaging application on a mobile electronic device in accordance with certain aspects of the present disclosure.

### DETAILED DESCRIPTION

In one disclosed embodiment, a computer-implemented method is provided. The method may include receiving a selection of an attachment for adding to an outgoing communication message that is to be transmitted over a network using a communication technique. The method may also include determining whether the selected attachment is supported by the communication technique. The method may further include, when the selected attachment is unsupported by the communication technique, separating the selected attachment into individual data pieces that are supported by the communication technique. The method may further include attaching the individual data pieces to the outgoing communication message, and transmitting the outgoing communication message using the communication technique.

In another disclosed embodiment, a computer-readable storage medium that stores program instructions implements the above-described method.

In yet another disclosed embodiment, an apparatus is provided. The apparatus may include a memory device storing instructions for processing of communication messages, and a processor executing the instructions. The instructions, when executed by the processor of the apparatus, may instruct the apparatus to perform a series of steps. The steps may include receiving a selection of an attachment for adding to an outgoing communication message that is to be transmitted over a network using a communication technique. The steps may also include determining whether the selected attachment is supported by the communication technique. The steps may further include, when the selected attachment is unsupported by the communication technique, separating the selected attachment into individual data pieces that are supported by the communication technique. The steps may further include attaching the individual data pieces to the outgoing communication message, and transmitting the outgoing communication message using the communication technique.

In yet another disclosed embodiment, a computer-implemented method is provided. The method may include receiving a plurality of attachments to a communication message using a communication technique, wherein the plurality of attachments are supported by the communication technique and collectively comprise a custom attachment, the custom attachment being unsupported by the communication technique. The method may also include extracting the plurality of attachments from the communication message. The method may further include reconstructing the custom attachment from the plurality of attachments, and displaying the reconstructed custom attachment.

In yet another disclosed embodiment, a computer-implemented method is provided. The method may include receiving a selection of an attachment for adding to an outgoing communication message that is to be transmitted over a network using a first communication technique. The method may also include determining whether the selected attachment is supported by a second communication technique. The method may further include, when the selected attachment is supported by the second communication technique, separating the selected attachment into individual data pieces that are supported by the second communication technique. The method may further include attaching the individual data pieces to the outgoing communication message, and transmitting the outgoing communication message using the second communication technique.

It is to be understood that both the foregoing general description and the following detailed description are exemplary and explanatory only and are not restrictive of embodiments, as claimed.

The following detailed description refers to the accompanying drawings. Wherever possible, the same reference numbers are used in the drawings and the following description to refer to the same or similar parts. While several exemplary embodiments are described herein, modifications, adaptations and other implementations are possible. For example, substitutions, additions or modifications may be made to the components illustrated in the drawings, and the exemplary methods described herein may be modified by substituting, reordering, or adding steps to the disclosed methods. Accordingly, the following detailed description is not limiting. Instead, the proper scope is defined by the appended claims.

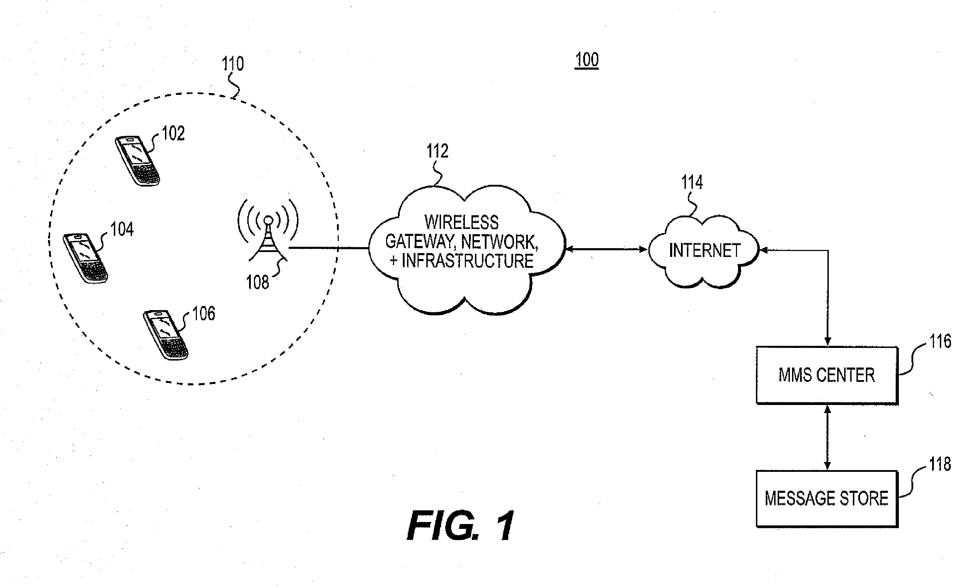

FIG. 1 shows an example of a communication system 100 in which exemplary mobile electronic devices 102,104, and 106 may be used, consistent with a disclosed embodiment. Examples of applicable mobile electronic devices may include cellular telephones, smartphones, personal digital assistants, or other such portable electronic devices. Such devices will hereinafter be commonly referred to as "mobile devices" for the sake of clarity. Mobile devices 102,104, and 106 may be two-way communication devices with advanced data communication capabilities including the capability to communicate with other mobile devices or computer systems (not shown) through, for example, base station 108. The mobile devices may also have the capability to allow voice communication.

For the purpose of illustration, communication system 100 is functionally represented in FIG. 1 and a single base station 108 is shown. The base station 108 defines a coverage area, or cell 110 within which communications between the base station 108 and mobile devices 102,104, and 106 can be effectuated. It will be appreciated that the mobile devices 102,104, and 106 are movable within cell 110 and can be moved to coverage areas defined by other cells that are not illustrated in the present example. Communication system 100 may include base station 108 that is part of a wireless gateway, network, and infrastructure 112 that provides a link to mobile devices 102, 104, and 106. The wireless gateway, network, and infrastructure 112 may include a number of other base stations (not shown) that provide additional cells providing coverage areas, as referred to above. Data may be delivered to mobile devices 102,104, and 106 via wireless transmission from base station 108. Similarly, data may be sent from mobile devices 102, 104, and 106 via wireless transmission to base station 108.

Wireless networks and infrastructures may include, for example, data-centric wireless networks, voice-centric wireless networks, or dual-mode wireless networks. For the purpose of the present exemplary embodiment, the wireless gateway, network, and infrastructure 112 may include a dual-mode wireless network that supports both voice and data communications over a plurality of base stations.

Wireless gateway, network, and infrastructure 112 may be connected through Internet 114 to Multimedia Messaging Service Center (MMSC) 116, thereby providing a link between MMSC 116 and mobile devices 102, 104, and 106. MMSC 116 may be coupled to a message store 118, which may be used for storing messages that are awaiting retrieval, either temporarily, or persistently. MMSC 116 may receive and decode received MMS messages to locate their destinations. Destinations may be specified as either an email address or a telephone number, and MMSC 116 may notify a mobile device of an MMS message received at MMSC 116, allowing the mobile device to retrieve, or pull, the MMS message from MMSC 116 via Internet 114.

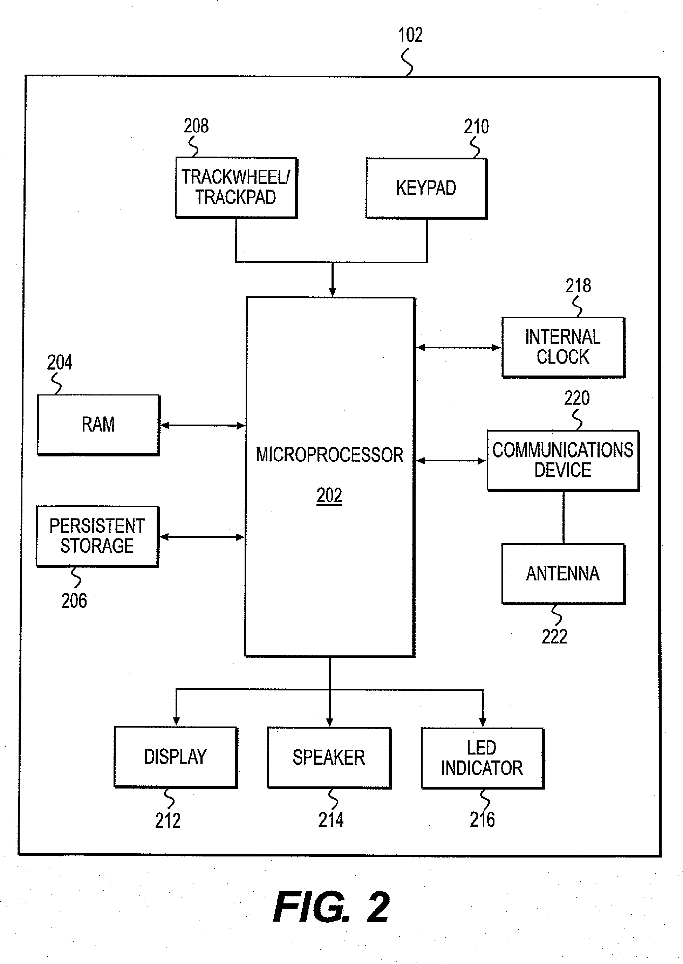

FIG. 2 is a block diagram of exemplary mobile device 102. Mobile device 102 may be based on a microcomputer that includes a microprocessor 202 connected to a random access memory (RAM) unit 204, and a persistent non-transitory computer-readable storage medium 206 that may be responsible for various nonvolatile storage functions of mobile device 102. Operating system software, and other application program software executable by microprocessor 202, may be stored in persistent storage medium 206. Persistent non-transitory computer-readable storage medium 206 may be, in certain embodiments, flash memory. However, it will be appreciated that the operating system software and application program software may be stored in other types of persistent non-transitory computer-readable storage mediums such as read-only memory (ROM), electrically erasable programmable read-only memory (EEPROM), magnetoresistive random access memory (MRAM), hard disks, optical discs, or any other forms of RAM or ROM.

Microprocessor 202 may receive input from a user by way of input devices such as trackwheel/trackpad 208 and keypad 210, and may output to output devices such as a display 212, speaker 214, and a light emitting diode (LED) indicator 216. Display 212 may be a liquid crystal display (LCD), a Cathode Ray Tube (CRT), a Thin Flat Transistor (TFT) array, an LED display, or any other such display type suitable for use as an output display. It is appreciated that microprocessor 202 may further receive input from a user by way of a user touch on display 212, which may be a touch sensitive surface for receiving user input. Input may also be received by way of an input object such as a stylus, and the phrase "input devices" as used hereinafter may include input by a user touch or by input objects such as a stylus. Microprocessor 202 may also be connected to an internal clock 218. Furthermore, mobile device 102 may be a two-way communication device having voice and data communication capabilities for communication with communications system 100. Two-way communication may be facilitated by communications device 220 that may be used to connect to and operate with communication system 100, via antenna 222.

For data communication, signals or data such as MMS messages may be received at communications device 220 via antenna 222, and may be processed and sent to microprocessor 202 where the signals or data are further processed for display on display 212. Data, such as messages, may also be composed using one or more of the input devices such as trackwheel/trackpad 208 or keypad 210. The data may be sent through the communications device 220 via antenna 222 to wireless gateway, network, and infrastructure 112 to which mobile device 102 connects. Although not shown, a battery may provide power to all active elements of mobile device 102.

Persistent storage device 206 may also store a plurality of applications executable by microprocessor 202 that may enable mobile device 102 to perform certain operations including the communication operations referred to above. Other application software may be provided such as, for example, messaging applications including SMS messaging, MMS messaging, and email messaging applications, a browser application for web browsing, an address book, a map application, a multimedia player, a calendar application, or any other such applications.

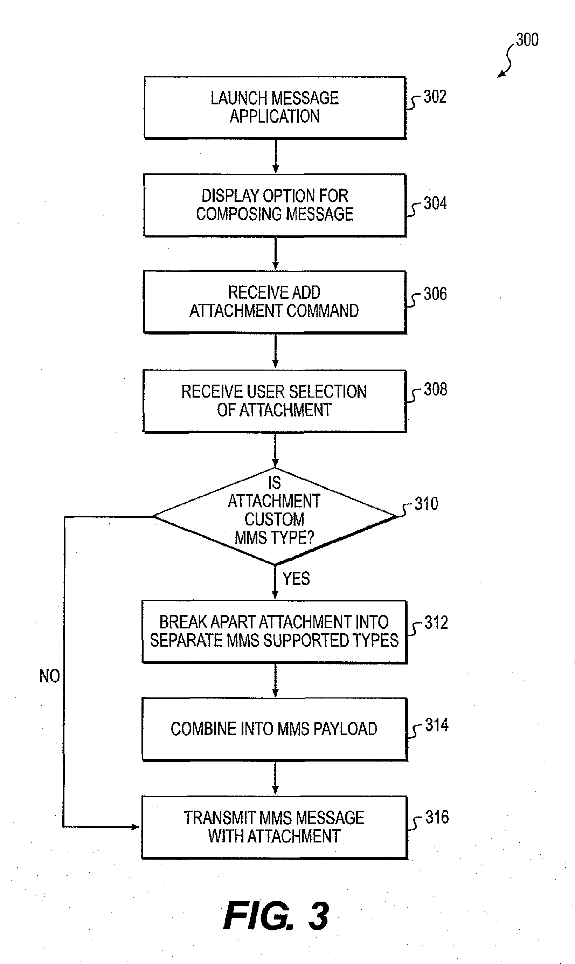

FIG. 3 is a flow diagram 300 of an exemplary method for allowing a user to send attachments representing locations or other such concepts. In some cases, the attachments may be unsupported by a communication technique of a messaging application, such as MMS messaging. Using method 300, the attachments may be transmitted in a manner supported by the communication technique, consistent with an exemplary embodiment. Such attachments may be sent by a messaging application implementing the communication technique, such as MMS messaging. The method described in connection with FIG. 3 may be implemented by, for example, program modules stored in persistent storage 206 of exemplary mobile device 102, and executed by microprocessor 202 of mobile device 102.

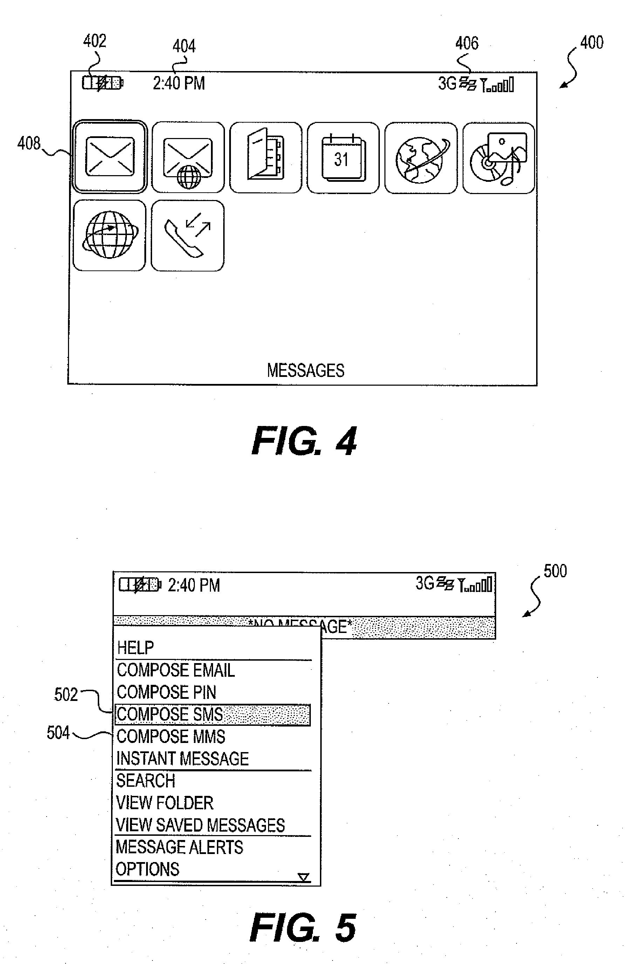

Method 300 begins at step 302, where mobile device 102 displays a menu screen on display 212, and receive a command to launch a messaging application. FIG. 4 represents an exemplary menu screen graphical user interface (GUI) 400 displayed on display 212. GUI 400 may include a battery charge indicator 402, a display clock 404 which is updated according to internal clock 218, a data signal indicator 406, and application icons identifying applications, such as a messaging application, which may provide access to, for example, email messaging, instant messaging, MMS, or SMS. Exemplary menu screen GUI 400 may also include application icons corresponding to applications such as a browser application for web browsing, an address book, a map application, a multimedia player, and a calendar application. Each of the displayed application icons may be selectable to invoke or launch a respective application by a user by utilizing, for example, trackwheel/trackpad 208 or keypad 210 to highlight an appropriate application. For example, as exemplified by messaging icon 408 of FIG. 4, a user may choose to select a messaging application. Upon receiving input from a user selecting to launch the messaging application by way of trackwheel/trackpad 208, keypad 210, or by touching the icon on a touch-sensitive display, a message listing may be displayed on display 212.

Selection of the messaging application icon 408 may cause execution of the messaging application by microprocessor 202 and a list of messages including email messages, SMS messages, MMS messages, or instant messages may be displayed to the user via display 212. It is to be appreciated that the list of messages is not limited to displaying all email messages, SMS messages, MMS messages, or instant messages, and may display a subset of received messages, and alternatively, may display other types of messages received by mobile device 102. It is also possible that messages may be displayed in separate listings depending on the message type. Thus, email messages, SMS messages, MMS messages, or instant messages may be displayed in separate lists.

Returning to FIG. 3, in step 304, mobile device 102 receives a command for displaying an option for composing a message. The message to be composed may include, for example, an email message, an SMS message, or an MMS message. FIG. 5 represents an exemplary GUI 500 displaying a submenu for providing a user a number of options for composing messages. A user may utilize trackwheel/trackpad 208, keypad 210, or touch sensitive display 212 to highlight the user's selection for composition of, for example, an email message, an SMS message, or an MMS message, exemplified by item 502 of FIG. 5.

In response to receiving a selection from a user indicating a type of message to compose, a GUI representing the type of message communication may be displayed to the user. For example, a user may select the Compose MMS menu option 504, resulting in the display of an MMS composition window to the user on display 212. The user may then provide, for example, an email address or telephone number for specifying a recipient mobile device to which the MMS message will be sent.

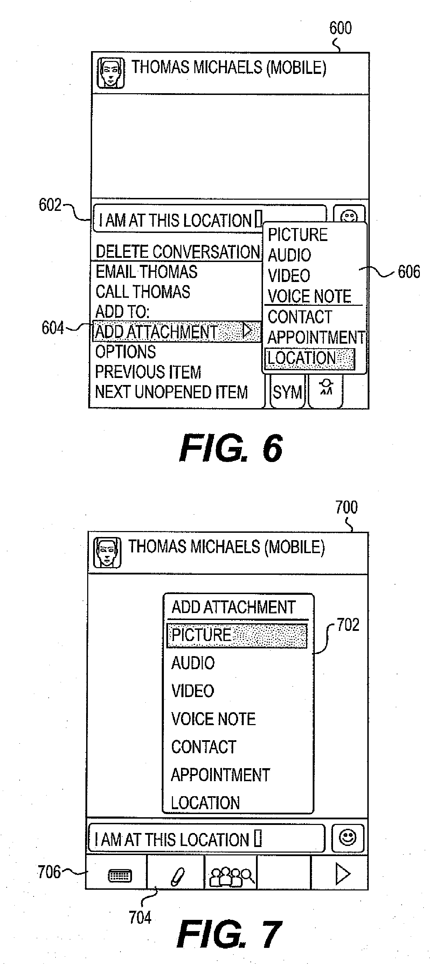

Returning again to FIG. 3, in step 306, the messaging application receives an add attachment command indicating that a user may specify that an attachment should be provided with the MMS message. FIG. 6 shows an exemplary MMS composition window 600. As shown in exemplary FIG. 6, a user may desire to add an attachment to an MMS message that the user is sending to a friend. Using trackwheel/trackpad 208, keypad 210, or other input device, the user may access a menu 602 providing a number of options available to a user in composing an MMS message. For example, a user may select the Add Attachment menu option 604, causing a submenu 606 to be displayed on display 212.

Referring again to FIG. 3, in step 308, the messaging application receives a user selection of a type of attachment to attach to the MMS message. Submenu of attachments 606 may provide a number of different attachment data types for attaching to the MMS message. Such data types may include, for example, text, pictures, audio, video, ringtones, or other such MMS-supported media types. Furthermore, there may be additional attachments unsupported by a communication technique, such as the MMS specification, that a user may desire to share via MMS messaging, such as an attachment specifying the user's current location, or a location of a restaurant or other such business. Such unsupported attachments may be hereinafter referred to as "custom attachments."

As shown in exemplary FIG. 6, MMS composition window 600 may include an Add Attachment submenu 606 providing to the user a number of custom attachment types, including, for example, a location attachment. Such an exemplary attachment may not be supported by the communication technique used for MMS, as the attachment is not in the set of MMS-supported media types set forth in the MMS specification. Accordingly, in an exemplary embodiment, additional processing may be performed for allowing a user to attach a variety of custom attachment types such that a message having an unsupported custom attachment may be transmitted in a way supported by the communication technique. The additional processing will be discussed in greater detail with respect to item 310 of FIG. 3, set forth below.

Alternatively, as shown in exemplary FIG. 7, MMS composition window 700 may include an Add Attachment menu 702 selectable via a GUI element on the MMS composition window 700. For example, a mobile device having a touch-sensitive screen may display a paperclip icon 704 in a shortcut bar 706 of MMS composition window 700. Upon receiving a selection by way of, for example, a user touch on an appropriate portion of display 212, or a selection with trackwheel/trackpad 208 or keypad 210, the Add Attachment menu 702 in the form of a popup or window may appear as shown in exemplary FIG. 7, allowing the user to select an attachment type to include with the MMS message.

Returning to FIG. 3, in step 310, the messaging application determines whether the user selection for an attachment indicates an MMS-supported attachment type, or a custom attachment type. If the messaging application determines that the selected attachment indicates an MMS-supported attachment type, the messaging application will proceed with transmitting the MMS message with the supported attachment to the recipient mobile device.

However, as shown in exemplary FIG. 6, a user may select to attach a location attachment to an MMS message designated for a recipient mobile device. As the location attachment is not a standard supported MMS type, and therefore is unsupported by the communication technique, an MMSC may reject the message before it reaches the recipient mobile device, or the recipient mobile device may not properly display information associated with the location attachment due to the attachment not being a supported MMS type. Accordingly, additional processing may be performed on the custom attachment, such that the custom attachment is transmitted using existing MMS attachment types supported by the communication technique. Such additional processing may be performed transparently to the user of mobile device 102. That is, the user may simply select to attach the custom attachment, and no further interaction with the user is required for performing the additional processing of handling the custom attachment.

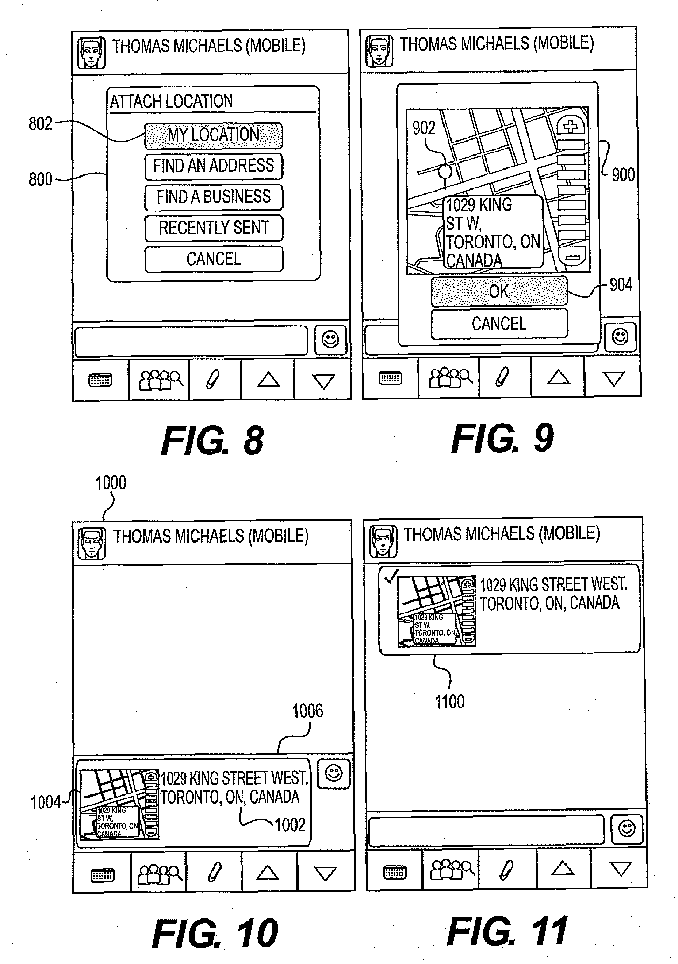

The procedure for selecting a custom attachment for inclusion with an MMS message will now be described. As noted above, in one exemplary embodiment, a user may desire to attach a location attachment to an MMS message designated for a recipient mobile device. Upon selection of the location option from Add Attachment menu 606 or 702, exemplified in FIG. 6 and FIG. 7, a user may be provided with a menu allowing the user to select a number of options including, for example, the user's current location, a specific address entered by the user, searching for a particular business, or sending locations that have been recently sent to other mobile devices. Exemplary FIG. 8 shows a menu 800 whereby a user has selected the "My Location" option 802, allowing the user to attach a location specified by the user's current location. Mobile device 102 may then attempt to auto-locate the user's mobile device by a number of locational services depending on the hardware in the user's mobile device. For example, Geolocation or GPS may be utilized to automatically determine the user's current location. However, it is to be appreciated that other such locational services may be utilized as well. Additionally, if the user's current location cannot be determined automatically, the user may be presented an option to manually specify a location.

Upon successfully obtaining the location of the user's mobile device, either automatically or by manual entry by the user, a map dialog window providing a portion of a map may be displayed on display 212 with the user's precise or approximate location pinned, for example, in the center of the map. An exemplary map dialog window 900 is displayed in FIG. 9, where the user's mobile device is determined to be located at 1029 King Street West, Toronto, Ontario, Canada. From this map display, a user may zoom and pan the map to verify and confirm the context of the location before sending the location via MMS to a recipient. In an exemplary embodiment, if the user's location was determined using Geolocation, and is therefore an approximation of the user's location, a pushpin 902 or other such indicator may be displayed at a location on the map indicating the user's location, and a circle (not shown) may be displayed surrounding the pushpin, indicating a degree of uncertainty as to the exact location of the user.

Once satisfied with the location displayed on the map dialog window, the user may confirm the specified location by selection of an "OK" option 904, as shown in exemplary FIG. 9. The location information may then be placed as an attachment into the MMS composition window 1000 of exemplary FIG. 10, and may display a textual description 1002 of the location, along with a map image 1004 in the MMS application's composition field 1006. The user may then initiate sending of the attachment to the recipient mobile device by way of trackwheel/trackpad 208, keypad 210, or other input device causing the user's mobile device to process the MMS message and attachment for sending to the recipient mobile device. Once sending is successful, a confirmation 1100 of the transfer may be displayed to the user, as shown in exemplary FIG. 11.

For attachments that may not be supported by a communication technique, such as MMS messaging, the messaging application may perform additional processing on the attachment prior to actual transmission to the recipient mobile device. For example, referring back to FIG. 3, in step 312, the messaging application separates the custom attachment into separate data pieces that, individually, are MMS-supported data types and are thus supported by the communication technique used to send the message. By separating the custom attachment into separate MMS-supported data types, the custom attachment may be sent to the recipient mobile device as a collection of MMS-supported attachments, and reassembled back into the custom attachment at the location of the recipient mobile device.

For example, assuming a user has selected a location as a custom attachment, as set forth above, the messaging application may separate the location attachment into three separate parts: a map image, a location description, and an optional URL. Furthermore, if the location being sent reflects a business, the location description may contain all of the business related information including, for example, a name, address, phone number, email address, or fax number. These three separate data pieces may be represented as supported MMS attachment types, as the map may be transmitted as an image, and the description and the URL may be transmitted as text. It is to be appreciated that a location may be represented by only a map image and a location description, and that the optional URL may be utilized depending on mapping service requirements of a mobile service provider or a mobile electronic device. Thus, in the following discussion, it is to be understood that a reference to the URL part of the location attachment is for exemplary discussion purposes only, and that the inclusion of such a URL part is optional.

Additionally, the custom attachment data pieces may use common file names to identify the data pieces as collectively belonging to a custom attachment. For example, a custom attachment may be broken into separate data pieces using the common file name format "[type]-[id]-[part]." For example, when a location attachment is separated into a map image, a location description, and a URL, the resulting file names of the separated data pieces may be named "location-1-map.jpg," "location-1-description.txt," and "location-1-url.txt." Additionally, multiple custom location attachments may be provided in a single MMS message by virtue of the use of an identifier, or id, in the file name, thereby allowing a user to share multiple locations via MMS. For example, a second custom location attachment may be provided with data pieces named "location-2-map.jpg," "location-2-descritpion.txt," and "location-2-url.txt."

Accordingly, in step 314, the separated map image, location description, and URL are stored in an MMS payload as standard image and text attachments, for transmission via MMS to a recipient mobile device. Furthermore, in step 316, the custom location attachment is transmitted to a recipient mobile device in recognizable MMS formats. Transmitting the custom location attachment as separate supported attachments may prevent the custom location attachment from being rejected by the MMSC.

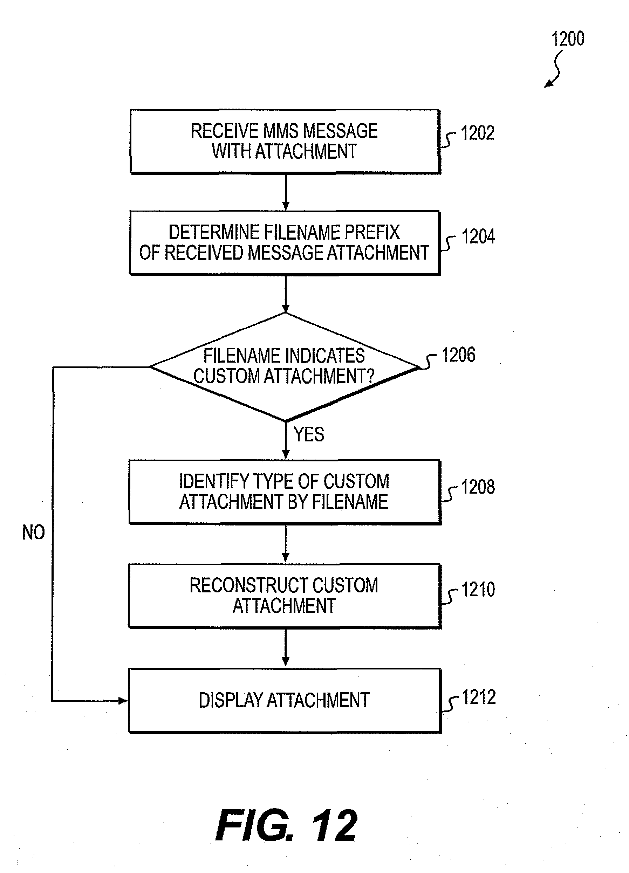

FIG. 12 is a flow diagram 1200 of an exemplary method for receiving an MMS message, and determining whether the MMS message contains a custom attachment consistent with a disclosed embodiment. The method described in connection with FIG. 12 may be implemented by, for example, program modules stored in persistent storage 206 of exemplary mobile device 104, and executed by microprocessor 202 of mobile device 104.

At the start of the process, at step 1202, mobile device 104 may receive an MMS message sent by a user of mobile device 102. The received MMS message may contain a plurality of attachments indicative of whether the plurality of attachments collectively comprise a custom attachment unsupported by the communication technique.

For example, at step 1204, a messaging application executing on mobile device 104 determines file name prefixes of the attachment data. At step 1206, the messaging application determines whether the file name prefixes of the attachment data indicate the presence of a custom attachment, and therefore collectively comprise a custom attachment. If mobile device 104 determines that the attachment is not a custom attachment, the attachment is displayed to the user without any additional processing, at step 1212.

However, if the messaging application determines that the file name prefixes indicate the presence of a custom attachment, the method proceeds to step 1208, where the messaging application extracts the plurality of attachments from the MMS message that collectively comprise the custom attachment. Furthermore, the messaging application identifies a type of custom attachment according to the file names of the attachment data. For example, the messaging application determines a custom location attachment by analyzing the file names of the attachment data included with the MMS payload to determine whether the MMS attachment data uses a common file name and follows the format "[type]-[id]-[part]." If the messaging application finds a number of attachments following the format of the common file name, such as "location-1-map.jpg," "location-1-description.txt," and "location-1-url.txt," the messaging application determines that a custom location attachment is indicated, and the single custom location attachment is reconstructed from the multiple separated data pieces.

At step 1210, the messaging application reconstructs the custom attachment as a single attachment according to the information provided in the file names of the attachment data. Furthermore, if messaging application finds multiple file names containing different id values contained in the file prefixes, the messaging application determines that multiple custom attachments have been included with the MMS message, and reconstructs each individual custom attachment.

At step 1212, the messaging application displays the reconstructed custom attachment to the user of mobile device 104 via display 212. User interaction with the reconstructed custom attachment may be affected by application program software installed on mobile device 104. For example, with an appropriate maps application installed, a user of mobile device 104 may choose to "open" the custom location attachment from within the messaging program, which may result in launching of the maps application to provide a view of the location specified by the custom attachment. Alternatively, if an appropriate maps application is not installed on mobile device 104, clicking to "open" the custom location attachment may cause the map image portion of the custom location attachment to open in a larger view on mobile device 104, allowing the user of mobile device 104 to view the location on a mobile device that lacks an appropriate maps application.

Furthermore, in circumstances where the recipient mobile device does not support the above-discussed functionality and may not recognize a custom attachment, the custom attachment processing may not be performed. However, due to the separation of the custom attachment into individual MMS supported attachments, details regarding a custom attachment may still be viewed by a user of a recipient mobile device that does not support a custom attachment. For example, the recipient mobile device may display the map image and the location description as separate MMS attachments included with an MMS message. Accordingly, even on devices that are not capable of detecting the custom attachment, an undesirable user experience may be avoided by allowing a user to view the individual map image attachment and the location description attachment in a human-readable fashion on the recipient mobile device.

Alternatively, the above discussed implementation may be used to select between two communication techniques for transmitting attachments. For example, mobile device 102 may receive a selection by way of input devices such as trackwheel/trackpad 208 and keypad 210 selecting an attachment, along with a selection of a first communication technique to be used for transmitting the specified attachment. A messaging application may then determine whether the selected attachment is supported by a second communication technique different from the first communication technique. For example, if wireless network, gateway, and infrastructure 112 no longer supports the first communication technique, but now supports the second communication technique, the messaging application may separate the selected attachment into individual data pieces that are supported by the second communication technique. Alternatively, mobile device 102 may determine that the second communication technique is more efficient for transmitting purposes than the selected first communication technique. Mobile device 102 may then attach the individual data pieces to the outgoing communication message, and transmit the message using the second communication technique.

Furthermore, in an alternate embodiment, the messaging application may embed metadata into a file associated with an MMS message. This embedded metadata may be used to identify data pieces as collectively belonging to a custom attachment. For example, the messaging application may embed metadata identifying the data pieces into a Synchronized Multimedia Integration Language (SMIL) presentation file associated with an MMS message. The metadata embedded into the SMIL presentation file may be accessed to identify the data pieces of the MMS message as collectively belonging to a custom attachment. Accordingly, in instances where an MMSC has been configured to rename attachments to MMS messages, the recipient mobile device may be capable of identifying the data pieces as collectively belonging to a custom attachment based on the embedded metadata in the SMIL presentation file associated with the received MMS message.

The foregoing description has been presented for purposes of illustration. It is not exhaustive and is not limited to the precise forms or embodiments disclosed. Modifications and adaptations of the embodiments will be apparent from consideration of the specification and practice of the disclosed embodiments. For example, the described implementations include software, but systems and methods consistent with the present disclosure may be implemented as a combination of hardware and software or in hardware alone.

Computer programs based on the written description and methods of this specification are within the skill of a software developer. The various programs or program modules may be created using a variety of programming techniques. For example, program sections or program modules may be designed in or by means of Java, C, C++, assembly language, or any such programming languages. One or more of such software sections or modules may be integrated into a computer system or existing communications software.

Moreover, while illustrative embodiments have been described herein, the scope includes any and all embodiments having equivalent elements, modifications, omissions, combinations (e.g., of aspects across various embodiments), adaptations and/or alterations based on the present disclosure. The limitations in the claims are to be interpreted broadly based on the language employed in the claims and not limited to examples described in the present specification or during the prosecution of the application, which examples are to be construed as non-exclusive. Further, the steps of the disclosed methods may be modified in any manner, including by reordering steps and/or inserting or deleting steps. It is intended, therefore, that the specification and examples be considered as exemplary only, with a true scope and spirit being indicated by the following claims and their full scope of equivalents.

## Claims

1. A computer-implemented method comprising:
receiving (308) a selection of an attachment for adding to an outgoing communication message that is to be transmitted over a network (112) using a communication technique;
determining (310) whether the selected attachment is supported by the communication technique;
when the selected attachment is unsupported by the communication technique, separating (312) the selected attachment into individual data pieces that are supported by the communication technique;
attaching (314) the individual data pieces to the outgoing communication message; and
transmitting (316) the outgoing communication message using the communication technique.

2. The method of claim 1, wherein transmitting the outgoing communication message comprises transmitting the outgoing message using a communication technique based on a Multimedia Messaging Service (MMS) specification.

3. The method of claim 1, wherein separating the selected attachment into individual data pieces further comprises:
assigning, to the individual data pieces, a common file name format for identifying the individual data pieces as representing a single attachment unsupported by the communication technique.

4. The method of claim 3, wherein assigning the common file name format comprises assigning the common file name format to reflect a type of the selected attachment, an identifier common to the selected attachment, and a part reflecting data contained in at least one of the individual data pieces.

5. The method of claim 1, wherein separating the selected attachment comprises separating the selected attachment into individual data pieces corresponding to a custom location attachment, the individual data pieces comprising at least one of a map, a description, and a URL as media types supported by the communication technique.

6. A computer-readable storage medium (206) storing instructions which, when executed by a processor (202) of an electronic device (102), causes the electronic device (102) to perform a method comprising:
receiving (308) a selection of an attachment for adding to an outgoing communication message that is to be transmitted over a network (112) using a communication technique;
determining (310) whether the selected attachment is supported by the communication technique;
when the selected attachment is unsupported by the communication technique, separating (312) the selected attachment into individual data pieces that are supported by the communication technique;
attaching (314) the individual data pieces to the outgoing communication message; and
transmitting (316) the outgoing communication message using the communication technique.

7. The computer-readable storage medium (206) of claim 6, further storing instructions which, when executed by the processor (202), causes the electronic device (102) to transmit the outgoing communication message using a communication technique based on a Multimedia Messaging Service (MMS) specification.

8. The computer-readable storage medium (206) of claim 6, further storing instructions which, when executed by the processor (202), causes the electronic device (102) to separate the selected attachment into individual data pieces by assigning, to the individual data pieces, a common file name format for identifying the individual data pieces as representing a single attachment unsupported by the communication technique.

9. The computer-readable storage medium (206) of claim 8, further storing instructions which, when executed by the processor (202), causes the electronic device (102) to assign the common file name format to reflect a type of the selected attachment, an identifier common to the selected attachment, and a part reflecting data contained in at least one of the individual data pieces.

10. The computer-readable storage medium (206) of claim 6, further storing instructions which, when executed by the processor (202), causes the electronic device (102) to separate the selected attachment by separating the selected attachment into individual data pieces corresponding to a custom location attachment, the individual data pieces comprising at least one of a map, a description, and a URL as media types supported by the communication technique.

11. An apparatus (102) comprising:
a memory device (206) storing instructions for processing of communication messages; and
a processor (202) executing the instructions to:
receive (308) a selection of an attachment for adding to an outgoing communication message that is to be transmitted over a network using a communication technique;
determine (310) whether the selected attachment is supported by the communication technique;
when the selected attachment is unsupported by the communication technique, separate (312) the selected attachment into individual data pieces that are supported by the communication technique;
attach (314) the individual data pieces to the outgoing communication message; and
transmit (316) the outgoing communication message using the communication technique.

12. The apparatus (102) of claim 11, wherein the communication technique is based on a Multimedia Messaging Service (MMS) specification.

13. The apparatus (102) of claim 11, wherein the individual data pieces are assigned a common file name format for identifying the individual data pieces as representing a single attachment unsupported by the communication technique.

14. The apparatus of claim 13, wherein the common file name format reflects a type of the selected attachment, an identifier common to the selected attachment, and a part reflecting data contained in at least one of the individual data pieces.

15. The apparatus (102) of claim 13, wherein the selected attachment is separated into individual data pieces corresponding to a custom location attachment, the individual data pieces comprising at least one of a map, a description, or a URL, and the individual data pieces are attached to the outgoing communication message as supported media types according to the communication technique.
